# EUROPEAN PATENT SPECIFICATION

(11) **EP 1 866 917 B1**
(45) Date of publication and mention of the grant of the patent: **30.07.2008**
(21) Application number: 06727690.7
(22) Date of filing: 21.03.2006
(51) Int. Cl.: G11B 7/085

(54) **A METHOD FOR REPRODUCING INFORMATION FROM A PLURAL LAYER OPTICAL INFORMATION CARRIER**
VERFAHREN ZUR WIEDERGABE VON INFORMATIONEN AUF EINEM MEHRSCHICHTIGEN OPTISCHEN INFORMATIONSTRÄGER
PROCEDE DE REPRODUCTION D' INFORMATIONS A PARTIR D'UNE PORTEUSE D'INFORMATIONS OPTIQUES A PLUSIEURS COUCHES

(30) Priority: 31.03.2005 EP 05102544
(43) Date of publication of application: 19.12.2007
(73) Proprietor: Koninklijke Philips Electronics N.V., 5621 BA Eindhoven (NL)
(72) Inventor: GEURTS, Joris, H., J., NL-5656 AA Eindhoven (NL); LOOIJMANS, Hendrikus, A., J., NL-5656 AA Eindhoven (NL)
(74) Representative: Uittenbogaard, Frank
(86) International application number: PCT/IB2006/050858
(87) International publication number: WO 2006/103593

(56) References cited:
- EP-A- 0 910 072
- US-A- 6 101 156
- US-A1- 2002 027 842
- US-A1- 2002 110 054
- US-B1- 6 298 020

## Description

The present invention relates to a method for reproducing and/or recording information from/to a plural layer optical information carrier, such as a dual layer optical information carrier. The invention further relates to an optical apparatus for reproducing and/or recording from/to a multi-layer carrier.

In order to meet the demand of increasing information storage capacity the available optical media, presently e.g. digital versatile disc (DVD) and the Blu-ray Disc (BD), show a constant improvement in storage capacity. Dual-layer optical media or even multi-layer optical media has also been introduced to further increase the storage capacity.

Recording and reproducing information in dual-layer media and in particular multi-layer media forms a technical challenge, as the optical hardware must be adapted for essentially an extra dimension of variation. Optical discs conventionally have their information organized in sectors that is the smallest unit that can be recorded on a disc. Each sector has a header region containing information about the actual physical location of the data, i.e. physical identification data (PID), a data region, and an error correction code region (ECC). Alternatively or additionally, sector and layer information may be stored in a wobble on a groove track or in pre-pits.

The reproduction of information includes preliminary steps like disc type recognition, spherical aberration compensation, optimizing closed radial loop tracking to enable signal read-out, deciding on the spiral tracking direction, attempting to read address in pre-groove (ADIP) and repeated optimized spherical aberration compensation. In order to have fast and reliable reproduction of information from a specific layer of information from a multi-layer media, the parameters of the optical drive is beneficially set to or optimized to parameter settings associated with the specific information layer in question. Such parameter settings e.g. focus offset and radial error signal scaling may be given a priori and/or optimized by closed-loop control schemes or similar. In e.g. US 6,101,156 a focus control device is disclosed for use on a multi-layer recording medium. Particularly, there is a controlling step of whether the light is focused on the intended layer, and if not then the focused light is changed to intended layer number by a so-called between-layer seek. During the seeking process the parameters are set to the settings required for the target layer.

Parallel to the increasing complexity of the optical media and corresponding optical drives there is a strong attention on the cost of optical media due to a highly competitive world-wide market for optical media. Unfortunately, there is a tendency that many plural layer optical media are not manufactured according to applicable standards and specifications due to 1) the more and more complex structure and/or manufacturing and the optical media and 2) only partly successful attempts to save costs on the manufacturing of the optical media. These kind of optical media are known in the field as marginal discs or out-of-spec discs. The advent of such marginal discs has motivated the manufactures of optical drives to design optical drives capable of reproducing information from marginal discs, i.e. the optical drives should be more robust and adaptive to the optical media to ensure stabile and reliable reproduction of information.

Hence, an improved method for reproducing information from a plural layer carrier would be advantageous, and in particular a more faster and/or reliable method for reproducing information from a plural layer carrier would be advantageous.

Accordingly, the invention preferably seeks to mitigate, alleviate or eliminate one or more of the above mentioned disadvantages singly or in any combination. In particular, it may be seen as an object of the present invention to provide a method that solves the above mentioned problems of the prior art with reproducing information from a plural layer carrier, possibly an out-of-spec-carrier.

This object and several other objects are obtained in a first aspect of the invention by providing a method for reproducing and/or recording information from/on an optical information carrier in an optical apparatus, the carrier having a plurality of information layers, by radiating light onto the optical information carrier, the method comprising the steps of:
- focusing the light at a first information layer, said first layer having associated a plurality of first layer parameter settings for optimized reproducing of information in the optical apparatus,
- detecting reflected light from the carrier, and
- providing information indicative of the actual information layer the light is focused at,
upon obtaining an indication that the light, due to an error, is focused substantially at a second information layer, said second layer having associated a plurality of second layer parameter settings for optimized reproducing of information in the optical apparatus, the following step is taken:
- changing at least one first layer parameter setting to the corresponding second layer parameter setting.

The invention is particularly but not exclusively advantageous for obtaining an improved method for reproducing and/or recording information from/to an optical information carrier because, if an error occurs due to e.g. an external shock or a defect of the optical carrier and the light is focused at a wrong layer, the setting of one or more layer parameters of the optical apparatus to the current layer parameters substantially improves the probability of a fast recovery. This is so because a hitherto known optical drive would, upon obtaining knowledge that the light is focused onto a wrong layer, immediately perform a layer-seek procedure back to the intended or right layer of information. However, there is a relatively large risk that this layer-seek process will fail due to the layer parameters being non-optimized. This results in yet another layer-seek process and hence the effective recovery time may be relatively long. By application of the present invention, the probability of that the layer-seek process will be successful in first attempt is increased substantially.

The present invention is not limited to dual layer media. Rather, the invention may beneficially be applied for three layers, four layers, five layers and so forth, as the level of complexity generally increases with the number of information layers so that the advantages of the present invention will be more and more profound.

The changing of layer parameters may typically last up to 1 millisecond while a layer-seek process due to disabling of focus and radial tracking control loops etc. and the resulting mechanical temporal instability may last about 100 milliseconds. Thus, a priori the present invention does not seem to save much time. However, if the relative long lasting layer-seek process may be more effective in making a first-time recovery, i.e. immediate refocused to the right layer again without any second attempts, then the present invention will result in an more reliable operation of the optical apparatus.

Within the context of the present invention, the plurality of parameter settings for optimized reproduction may not necessarily represent the very best parameter settings, but the plurality of parameter settings for optimized reproduction may never the less represents a set of parameters that enable the optical apparatus to reproduce information from the carrier in a satisfactory and stabile manner. Thus, under practical conditions often several optimal parameter settings for satisfactory information reproduction are possible as the problem of optimizing the parameters is a mathematical multi-dimensional problem.

It should be mentioned that when the light is focused substantially at the second information layer, i.e. the wrong layer, this may be the result of a prior focus capture process. Alternatively, the light may go directly from being focused at the first layer, i.e. the right layer, to be focused at the second layer, i.e. the wrong layer, if the circumstances happen to allow that.

Beneficially, the method may further comprise the step of refocusing the light onto the first information layer, that is the optical apparatus will perform a recovery.

Beneficially, the first and second information layer parameters may chosen from the non-exhaustive group of: a focus offset, a focus controller gain, a focus jump direction, a radial error signal scaling, a track direction, collimator lens position, and an RF signal scaling. Each of these layer dependent parameters and their relevance will be further explained in the detailed part of the description below.

In an embodiment, the information indicative of the actual information layer the light is focused at, may provided from information stored on the information carrier, i.e. address information from a header in a sector, the wobble of a groove as in the DVD and BD format, or the land pre-pit of the DVD-R format.

In particular, the information indicative of the actual information layer the light is focused at, may be provided from current layer parameter settings of the optical apparatus. Though difficult to derive the layer identity from the current configuration of the optical apparatus, it may be possible to obtain estimates of the actual layer that the light is focused on. One possibility is to exploit the difference in reflected light from the different layers of a multi-layered carrier.

In particular, the error may occur, at least in part, due to an external disturbance to the optical apparatus and/or the optical information carrier such as a physical impact, e.g. a shock or similar. Therefore the present invention provides a solution to reproduction of information from optical carriers under harsh conditions, e.g. in a laptop computer, a car, a person jogging etc.

In an embodiment, the error may occur, at least in part, due to one or more deviations of the optical apparatus and/or the optical information carrier from applicable standards, i.e. that the optical drive or the carrier has some defect. For the optical information carriers this is becoming more and more frequent as discussed above, and hence the relevance of the present invention is increasing. A non-exhaustive list may include carrier standards like ECMA-267, ISO/IEC16448, ECMA-268, and ISO/IEC16449.

In a second aspect, the invention relates to an optical apparatus adapted for reproducing and/or recording information from/to an optical information carrier, the optical apparatus comprising:
- focusing means for focusing the light at a first information layer said first layer having associated a plurality of first layer parameter settings for optimized reproducing of information in the optical apparatus,
- detection means for detecting reflected light from the carrier, and
- providing means for providing information indicative of the actual information layer the light is focused at,
wherein the apparatus, upon obtaining an indication that the light, due to an error, is focused substantially at a second information layer, said second layer having associated a plurality of second layer parameter settings for optimized reproducing of information in the optical apparatus, is adapted to change at least one first layer parameter setting substantially to the corresponding second layer parameter setting.

In a third aspect, the invention relates to a computer program product being adapted to enable a computer system comprising at least one computer having data storage means associated therewith to control an optical recording apparatus according to the second aspect of the invention.

This aspect of the invention is particularly, but not exclusively, advantageous in that the present invention may be implemented by a computer program product enabling a computer system to perform the operations of the first aspect of the invention. Thus, it is contemplated that some known optical recording/reproducing apparatus may be changed to operate according to the present invention by installing a computer program product on a computer system controlling the said optical recording apparatus. Such a computer program product may be provided on any kind of computer readable medium, e.g. magnetically or optically based medium, or through a computer based network, e.g. the Internet.

The first, second and third aspect of the present invention may each be combined with any of the other aspects. These and other aspects of the invention will be apparent from and elucidated with reference to the embodiments described hereinafter.

The present invention will now be explained with reference to the accompanying Figures, where
Fig. 1 is a schematical diagram of an embodiment of an optical recording apparatus according to the invention, and
Fig. 2 is a flow-chart of the method according to the invention.

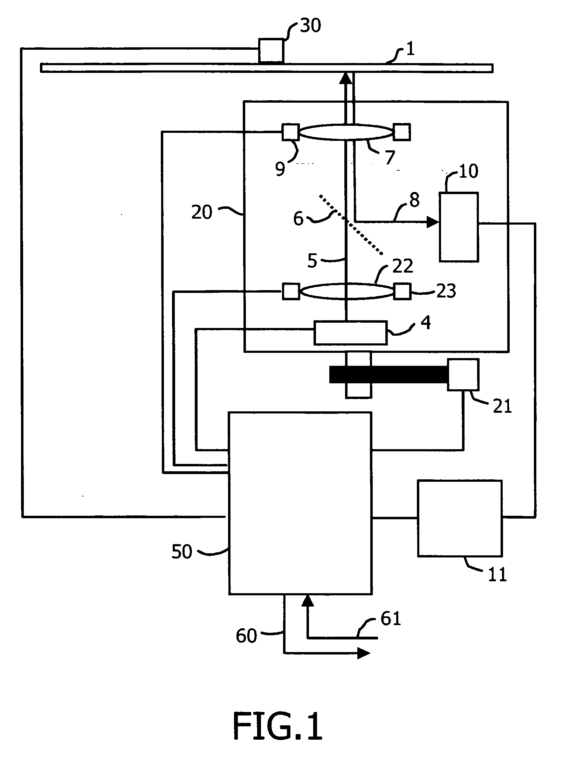

Figure 1 shows an optical apparatus according to the second aspect of the invention with an optical recording carrier 1. The carrier 1 is fixed and rotated by holding means 30.

The carrier 1 may comprise a material suitable for recording information by means of a radiation beam 5. The recording material may be of, for example, the magneto-optical type, the phase-change type, the dye type, metal alloys like Cu/Si or any other suitable material. Information may be recorded in the form of optically detectable regions, also called marks for rewriteable media and pits for write-once media, on the carrier 1. Alternatively, protrusions in a reflective layer made of e.g. aluminum or silver may provide optically readable effect as with read-only media. The carrier 1 comprises two layers, L1 and L0, respectively, where L0 is the layer closest to the entry point of the radiation beam 5 on the carrier 1.

The apparatus comprises an optical head 20, the optical head 20 being displaceable by actuation means 21, e.g. an electric stepping motor. The optical head 20 comprises a photo detection system 10, a radiation source 4, a beam splitter 6, an objective lens 7, and lens displacement means 9. The beam splitter 6 for diverging the reflected radiation 8 into the photo detection means 10 may be a polarizing or a non-polarizing type, or a hologram or a grating. The optical head 20 also comprises beam splitting means (not shown), such as a grating or a holographic pattern that is capable of splitting the radiation beam 5 into at least three components for use in the three spot differential push-pull radial tracking control method. For reason of the clarity the radiation beam 5 is shown as a single beam. Similarly, the radiation 8 reflected also comprises more than one component but only one beam 8 is shown in Figure 3 for clarity. The lens displacement means 9 is of the so-called three-dimensional type capable of displacing the lens 7 of course in the focal direction (z-direction) but also capable of displacing the lens 7 in the radial direction of the carrier 1. Additionally, the lens displacement 9 is capable of pivoting or tilting the lens 7 slightly around an axis being positioned in a plane substantially parallel to the carrier 1 and in a direction orthogonal to a radial direction of the carrier 1 in order to compensate e.g. "umbrella-like" defect of the carrier 1.

The optical head 20 also comprises collimator means, i.e. a collimator lens 22, for changing the diverging light 5 emitted from the radiation source 4 from a point source to a parallel beam 5. For reasons of clarity this is however not visible in Figure 3. The collimator lens 22 is displaceable substantially along the optical axis of the beam 5 by dedicated actuation means 23, i.e. an electric stepping motor.

In the embodiment shown in Figure 1, the collimator means is a collimator lens but collimator means may also comprise one or more liquid-crystal (LC) cells before the objective lens 7, or one or more telescopic lenses between the beam splitter 6 and the objective lens 7.

The function of the photo detection system 10 is to convert radiation 8 reflected from the carrier 1 into electrical signals. Thus, the photo detection system 10 comprises several photo detectors, e.g. photodiodes, charged-coupled devices (CCD), etc., capable of generating one or more electric output signals that are transmitted to a pre-processor 11. The photo detectors are arranged spatially to one another, and with a sufficient time resolution so as to enable detection of focus error (FE) and radial tracking errors (RTE) in the pre-processor 11. Thus, the pre-processor 11 transmits focus error and radial tracking error signals to the processor 50. The photo detection system 10 can also transmit a read signal or RF signal representing the information being read from the carrier 1 to the processor 50 through the pre-processor 11. An important layer parameter for the RF signal is the RF signal scaling, this is due to reflection differences, both the amplitude and offset of the RF channel will be different on L0 and L1. A factor of two difference can be found in practice. Using the wrong settings will result in troublesome RF readout.

Several methods are available for obtaining the error in a radial direction, i.e. the deviation from the actual radial position relative to the intended or ideal radial position, one such method being the push-pull (PP) method where a tracking error signal is generated on the basis of the level difference between optical signals detected in an optical sensor of the optical reproducing apparatus. Another option is the differential time (or phase) detection (DTD) method, wherein a phase difference between the optical signals detected in the optical sensors of the optical reproducing apparatus is applied for generating a radial tracking error signal.

An important layer dependent parameter is the radial error signal scaling, because both the amplitude and offset of the radial error signal can be different from L0 to L1. Amplitude variations of a factor 2 are common. The problem of using the incorrect settings, is that the radial servo system becomes unstable. Yet another layer dependent parameter is the tracking direction. When reproducing from carriers 1 having Opposite Track Path (OTP), the spiral of that format has an opposite direction on the layers L0 and L1, which can be important for the radial tracking displacement of the optical head 10.

Several methods are available for obtaining the error in a focal direction (FE), i.e. the deviation from the actual focal position relative to the intended or ideal focal position. Ideally, the focus error should be eliminated but under practical condition it may be beneficial to have a small focus offset as experience shows that this may increase stability. The focus offset will almost always have a different value for L0 and L1 due to the optical effect of the different position of the two layers in the carrier 1. This parameter is most relevant for the RF channel; the difference can be so large that data cannot be read without errors when using the wrong focus offset value. Additionally, focus offset can be an important factor for the radial push-pull signal. Similarly, the focus controller gain is an important parameter because the shape of the focus s-curve can vary quite much between L0 and L1 (up to a factor 1.5 amplitude difference), and thus the controller gain is adapted to the specific layer. If this is not done, the focus servo may behave unstable, and refocusing from one layer to the other can be difficult. Another relevant layer parameter for focus is the focus jump direction. When changing or jumping from e.g. L0 to L1 there will be either a positive or negative acceleration voltage on the focus actuator 9. If this layer parameter is not set correct it may lead to a focus jump in the wrong direction.

The radiation source 4 for emitting a radiation beam 5 can for example be a semiconductor laser with a variable power, possibly also with variable wavelength of radiation. Alternatively, the radiation source 4 may comprise more than one laser. Within the context of the present invention the term "light" is understood to be equivalent to a radiation beam 5.

The optical head 20 is optically arranged so that the radiation beam 5 is directed to the optical carrier 1 via the collimator lens 22, the beam splitter 6, and the objective lens 7. Radiation 8 reflected from the carrier 1 is collected by the objective lens 7 and, after passing through the beam splitter 6, falls on a photo detection system 10 which converts the incident radiation 8 to electric output signals as described above.

The processor 50 receives and analyses output signals from the pre-processor 11. The processor 50 can also output control signals to the actuation means 21, the radiation source 4, the lens displacement means 9, the collimator actuation means 23, the pre-processor 11, and the holding means 30, as illustrated in Figure 1. Similarly, the processor 50 can receive data, e.g. information to be written on the carrier 1, indicated at 61, and the processor 50 may output data from the reading process as indicated at 60. If the processor 50 obtains an indication that the light 5 is focused at the wrong layer L0, the processor 50 make a change of one or more current parameter settings SL1 to the corresponding layer parameters SL0 associated with the layer L0 on which the light 5 is actually focused. After having changed to the layer parameters SL0 the processor 50 initiate a layer-seek or refocusing procedure to the intended layer L1. The present invention is particularly beneficially in that there is an increased probability that the recovery will be successful in the first attempt due to the corrected or adapted layer parameters.

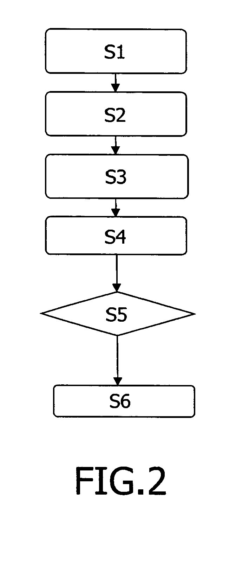

Figure 2 is a flow-chart of the method according to the invention.

In a first step S1, the light 5 is focused at a first information layer L1, the first layer having associated a plurality of first layer parameter settings SL1 for optimized reproducing of information in the optical apparatus.

In a second step S2, the reflected light 8 from the carrier 1 is detected by photo detection means 10.

In a third step S3, information is provided indicative of the actual information layer L1 or L0 the light 5 is focused at. This information may be proved from information read from addresses on the information carrier 1, e.g. in header region of a sector, or from indicators of the optical apparatus such a absolute focus setting, level of reflected light as multi-layer media has variable reflectivity etc. It is further contemplated, that the push-pull amplitude for radial tracking and the RF amplitude could be exploited to provide the identity of the actual layer: L1 or L0.

Then in a fourth step S4, there is obtained an indication that the light 5, due to an error of some kind, is focused substantially at a second information layer LO, i.e. the wrong layer.

In step five S5, the actual decision is taken, that the light 5 is focused incorrectly.

Finally, in the sixth step S6, the processor 50 is changing at least one first layer parameter setting SL1 substantially to the corresponding second layer parameter setting SL0. Preferably, all first layer parameter settings SL1 are changed to their corresponding second layer parameter settings SL0. A distinction may be made between layer parameters that are changed purely electronically, e.g. scaling factors etc., and mechanical layer parameters that require an actual displacement of an actuator, e.g. a focus actuator 9. Of course, the purely electronic parameters may be changed faster than the mechanical layers parameters. In an embodiment, only or mainly electronic layer dependent parameters are changed to increase the speed of the changing process.

Although the present invention has been described in connection with the specified embodiments, it is not intended to be limited to the specific form set forth herein. Rather, the scope of the present invention is limited only by the accompanying claims. In the claims, the term comprising does not exclude the presence of other elements or steps. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Furthermore, reference signs in the claims shall not be construed as limiting the scope.

## Claims

1. A method for reproducing and/or recording information from/on an optical information carrier (1) in an optical apparatus, the carrier (1) having a plurality of information layers (L1, L0), by radiating light (5) onto the optical information carrier (1), the method comprising the steps of:
- focusing the light (5) at a first information layer (L1), said first layer having associated a plurality of first layer parameter settings (SL1) for optimized reproducing of information in the optical apparatus,
- detecting reflected light (8) from the carrier (1), and
- providing information indicative of the actual information layer (L1, L0) the light (5) is focused at,
**characterized in that** upon obtaining an indication that the light (5), due to an error, is focused substantially at a second information layer (LO), said second layer (L0) having associated a plurality of second layer parameter settings (SL0) for optimized reproducing of information in the optical apparatus, the following step is taken:
- changing at least one first layer parameter setting (SL1) to the corresponding second layer parameter setting (SL0).

2. A method according to claim 1, the method further comprising the step of refocusing the light (5) onto the first information layer (L1).

3. A method according to claim 1, wherein the first and second information layer parameters (SL1, SL0) are chosen from the group of: a focus offset, a focus controller gain, a focus jump direction, a radial error signal scaling, a track direction, a collimator lens position, and a RF signal scaling.

4. A method according to claim 1, wherein the information indicative of the actual information layer (L1, L0) the light (5) is focused at, is provided from information stored on the information carrier.

5. A method according to claim 1, wherein the information indicative of the actual information layer (L1, L0) the light (5) is focused at, is provided from current layer parameter settings (SL1, SL0) of the optical apparatus.

6. A method according to claim 1, wherein the error occurs, at least in part, due to an external disturbance to the optical apparatus and/or the optical information carrier (1).

7. A method according to claim 1, wherein the error occurs, at least in part, due to one or more deviations of the optical apparatus and/or the optical information carrier (1) from applicable standards.

8. An optical apparatus adapted for reproducing and/or recording information from/to an optical information carrier (1), the optical apparatus comprising:
- focusing means (7, 9) for focusing the light at a first information layer (L 1), said first layer having associated a plurality of first layer parameter settings (SL1) for optimized reproducing of information in the optical apparatus,
- detection means (10) for detecting reflected light (8) from the carrier (1), and
- providing means (11, 50) for providing information indicative of the actual information layer (L1, L0) the light (5) is focused at,
**characterized in that**, the optical apparatus, upon obtaining an indication that the light (5), due to an error, is focused at a second information layer (LO), said second layer (L0) having associated a plurality of second layer parameter settings (SL0) for optimized reproducing of information in the optical apparatus, is adapted to change at least one first layer parameter setting (SL1) substantially to the corresponding second layer parameter setting (SL0).

9. A computer program product being adapted to enable a computer system comprising at least one computer having data storage means associated therewith to control an optical apparatus according to the information reproducing and/or recording method as claimed in claim 1.

## Patentansprüche

1. Verfahren zum Wiedergeben und/oder Aufzeichnen von Informationen von/auf einem optischen Informationsträger (1) in einem optischen Gerät, wobei der Träger (1) eine Vielzahl von Informationsschichten (L1, L0) aufweist, durch Ausstrahlen von Licht (5) auf den optischen Informationsträger (1), wobei das Verfahren die folgenden Schritte umfasst:
- Fokussieren des Lichtes (5) auf eine erste Informationsschicht (L1), wobei zu der genannten ersten Schicht eine Vielzahl von ersten Schichtparametereinstellungen (SL 1) für optimierte Wiedergabe von Informationen in dem optischen Gerät gehört,
- Detektieren von am Träger (1) reflektiertem Licht (8), und
- Bereitstellen von Informationen, die für die tatsächliche Informationsschicht (L1, L0), auf die das Licht (5) fokussiert ist, indikativ sind,
**dadurch gekennzeichnet, dass**
beim Erhalt einer Anzeige, dass das Licht (5) aufgrund eines Fehlers im Wesentlichen auf eine zweite Informationsschicht (L0) fokussiert ist, wobei zu der zweiten Schicht (L0) eine Vielzahl von zweiten Schichtparametereinstellungen (SL0) zur optimierten Wiedergabe von Informationen in dem optischen Gerät gehört, der folgende Schritt unternommen wird:
- Ändern zumindest einer ersten Schichtparametereinstellung (SL1) in die entsprechende zweite Schichtparametereinstellung (SL0).

2. Verfahren nach Anspruch 1, wobei das Verfahren weiter den Schritt des Rückfokussieren des Lichtes (5) auf die erste Informationsschicht (L1) umfasst.

3. Verfahren nach Anspruch 1, bei dem die ersten und zweiten Informationsschichtparameter (SL1, SL0) aus der folgenden Gruppe gewählt werden: ein Fokusversatz, eine Fokusreglerverstärkung, eine Fokussprungrichtung, eine Radialfehlersignalskalierung, eine Spurrichtung, eine Kollimatorlinsenposition und eine RF-Signalskalierung.

4. Verfahren nach Anspruch 1, bei dem die Informationen, die für die tatsächliche Informationsschicht (L1, L0), auf die das Licht (5) fokussiert ist, indikativ sind, durch Informationen verschafft werden, die auf dem Informationsträger gespeichert sind.

5. Verfahren nach Anspruch 1, bei dem die Informationen, die für die tatsächliche Informationsschicht (L1, L0), auf die das Licht (5) fokussiert ist, indikativ sind, durch aktuelle Schichtparametereinstellungen (SL1, SL0) des optischen Gerätes verschafft werden.

6. Verfahren nach Anspruch 1, bei dem der Fehler zumindest teilweise aufgrund einer auf das optische Gerät und/oder den optischen Informationsträger (1) ausgeübten externen Störung auftritt.

7. Verfahren nach Anspruch 1, bei dem der Fehler zumindest teilweise aufgrund einer oder mehrerer Abweichungen des optischen Gerätes und/oder des optischen Informationsträgers (1) von geeigneten Standards auftritt.

8. Optisches Gerät, angepasst zum Wiedergeben und/oder Aufzeichnen von Informationen von/auf einem optischen Informationsträger (1), wobei das optische Gerät Folgendes umfasst:
- Fokussiermittel (7, 9) zum Fokussieren des Lichtes auf eine erste Informationsschicht (L1), wobei zu der genannten ersten Schicht eine Vielzahl von ersten Schichtparametereinstellungen (SL1) für optimierte Wiedergabe von Informationen in dem optischen Gerät gehört,
- Detektionsmittel (10) zum Detektieren von am Träger (1) reflektiertem Licht (8), und
- Bereitstellungsmittel (11, 50) zum Bereitstellen von Informationen, die für die tatsächliche Informationsschicht (L1, L0), auf die das Licht (5) fokussiert ist, indikativ sind,
**dadurch gekennzeichnet, dass** das optische Gerät angepasst ist, beim Erhalt einer Anzeige, dass das Licht (5) aufgrund eines Fehlers auf eine zweite Informationsschicht (L0) fokussiert ist, wobei zu der zweiten Schicht (L0) eine Vielzahl von zweiten Schichtparametereinstellungen (SL0) zur optimierten Wiedergabe von Informationen in dem optischen Gerät gehört, zumindest eine erste Schichtparametereinstellung (SL1) wesentlich in die entsprechende zweite Schichtparametereinstellung (SL0) zu ändern.

9. Computerprogrammprodukt, das angepasst ist, ein Computersystem, das zumindest einen Computer umfasst, zu dem Speichermittel gehören, zu befähigen, ein optisches Gerät gemäß dem Informationswiedergabe- und/oder -aufzeichnungsverfahren nach Anspruch 1 zu steuern.

## Revendications

1. Procédé pour la reproduction et/ou pour l'enregistrement de l'information à partir de/sur un support optique d'information (1) dans un appareil optique; le support (1) ayant une pluralité de couches d'information (L1, L0) en rayonnant de la lumière (5) sur le support optique d'information (1), le procédé comprenant les étapes consistant à:
- focaliser la lumière (5) sur une première couche d'information (L1), ladite première couche ayant associée une pluralité de réglages paramétriques (SL1) de la première couche pour la reproduction optimisée de l'information dans l'appareil optique,
- détecter la lumière réfléchie (8) en provenance du support (1), et
- fournir de l'information qui est indicative de la couche d'information réelle (L1, L0) sur laquelle la lumière (5) est focalisée,
**caractérisé en ce que,** à l'obtention d'une indication, la lumière (5), en raison d'une erreur, est focalisée sensiblement sur une deuxième couche d'information (L0), ladite deuxième couche ayant associée une pluralité de réglages paramétriques (SL0) de la deuxième couche pour la reproduction optimisée de l'information dans l'appareil optique, on effectue l'étape suivante consistant à:
- changer au moins un réglage paramétrique (SL1) de la première couche en réglage paramétrique correspondant (SL0) de la deuxième couche.

2. Procédé selon la revendication 1, le procédé comprenant encore l'étape consistant à recentrer la lumière (5) sur la première couche d'information (L1).

3. Procédé selon la revendication 1, dans lequel les première et deuxième paramètres (SL1, SL0) de la couche d'information sont choisis parmi le groupe constitué de: un décalage du foyer, un gain de contrôleur du foyer, une direction de saut du foyer, une mise à échelle radiale du signal d'erreur, une direction de la piste, une position de la lentille collimatrice et une mise à échelle du signal RF.

4. Procédé selon la revendication 1, dans lequel l'information qui est indicative de la couche d'information réelle (L1, L0) sur laquelle la lumière (5) est focalisée est fournie à partir de l'information qui est stockée sur le support d'information.

5. Procédé selon la revendication 1, dans lequel l'information qui est indicative de la couche d'information réelle (L1, L0) sur laquelle la lumière (5) est focalisée est fournie à partir des réglages paramétriques (SL1, SL0) de la couche actuelle de l'appareil optique.

6. Procédé selon la revendication 1, dans lequel l'erreur se produit, au moins en partie, en raison d'une perturbation externe de l'appareil optique et/ou du support optique d'information (1).

7. Procédé selon la revendication 1, dans lequel l'erreur se produit, au moins en partie, en raison d'une ou de plusieurs déviations de l'appareil optique et/ou du support optique d'information (1) à partir de normes applicables.

8. Appareil optique étant adapté de manière à reproduire et/ou à enregistrer de l'information à partir de/ sur un support optique d'information (1), l'appareil optique comprenant:
- des moyens de focalisation (7, 9) pour focaliser la lumière sur une première couche d'information (L1), ladite première couche ayant associée une pluralité de réglages paramétriques (SL1) de la première couche pour la reproduction optimisée de l'information dans l'appareil optique,
- des moyens de détection (10) pour détecter la lumière réfléchie (8) en provenance du support (1), et
- des moyens de fourniture (11, 50) pour fournir de l'information qui est indicative de la couche d'information réelle (L1, L0) sur laquelle la lumière (5) est focalisée,
**caractérisé en ce que,** à l'obtention d'une indication, la lumière (5), en raison d'une erreur, est focalisée sur une deuxième couche d'information (L0), ladite deuxième couche (L0) ayant associée une pluralité de réglages paramétriques (SL0) de la deuxième couche pour la reproduction optimisée de l'information dans l'appareil optique, est adaptée de manière à changer au moins un réglage paramétrique (SL1) de la première couche sensiblement en réglage paramétrique correspondant (SL0) de la deuxième couche.

9. Produit de programme informatique étant adapté de manière à permettre à un système d'ordinateur comprenant au moins un ordinateur ayant des moyens de stockage de données y étant associés de commander un appareil optique selon le procédé de reproduction et/ou d'enregistrement d'information comme revendiqué dans la revendication 1.
